# EUROPEAN PATENT APPLICATION

(11) **EP 3 136 757 A1**
(43) Date of publication of application: **01.03.2017**
(21) Application number: 16179331.0
(22) Date of filing: 13.07.2016
(51) Int. Cl.: H04W 4/02, H04W 24/08, H04W 16/18

(54) **INFORMATION DISPLAY METHOD AND APPARATUS**

(30) Priority: 24.08.2015 CN 201510524109
(71) Applicant: Xiaomi Inc., Beijing 100085 (CN)
(72) Inventor: LIU, Jing, BEIJING, 100085 (CN)
(74) Representative: Cougard, Jean-Marie

(57) **Abstract**

The present invention is related to an information display method and apparatus, a computer program and a recording medium, which pertains to the field of wireless communication technologies. The method comprises: acquiring (102) location information and a wireless signal strength of at least one test point in a current area; for each test point, determining (104), based on the wireless signal strength at the test point, signal strength visual information for a location area indicated by the location information of the test point; based on the signal strength visual information for each location area, generating (106) a signal strength distribution chart; and displaying (108) the signal strength distribution chart.

## Description

### TECHNICAL FIELD

The present invention is related to the field of wireless communication technologies, and more particularly to an information display method and apparatus.

### BACKGROUND ART

With development of communication technologies, various terminal devices such as cell phones, tablet computers and notebook computers have become necessities in people's lives.

Terminal devices can access networks through WLANs (wireless local area networks). Currently, users can only generally know the wireless signal quality at a given location according to the network connection conditions at the given location, such as accessibility to WLANs or webpage opening speeds. Therefore, users can not efficiently select locations of higher wireless signal quality for surfing internets.

### SUMMARY

Accordingly, embodiments of the present invention provide an information display method and apparatus, a computer program and a recording medium. The technical solutions are as below.

According to a first aspect of embodiments, the invention relates to an information display method, comprising:
acquiring location information and a wireless signal strength of at least one test point in a current area;
for each test point, determining, based on the wireless signal strength at the test point, signal strength visual information for a location area indicated by the location information of the test point;
generating a signal strength distribution chart based on the signal strength visual information for each location area; and
displaying the signal strength distribution chart.

A test point in a current area may be a particular position within said area.

Signal strength visual information may be visual information, like a transparency or a color, said visual information being representative of the strength or quality of the received signal. For example, a red color may represent a good signal quality whereas a green one may represent a bad signal quality.

A wireless signal strength at a test point is the strength of the wireless signal detected at the test point by a terminal device from a source (WiFi, 4G, etc.)

A signal strength distribution chart may be a chart representing the distribution of the signal strength or quality in a current area. This distribution chart may be presented to a user for him to know the wireless signal qualities throughout the area and the wireless signal quality difference between locations in the current area.

In a particular embodiment, said displaying the signal strength distribution chart comprises:
performing location matching between the signal strength distribution chart and an architectural plan corresponding to the current area; and
displaying the signal strength distribution chart in the architectural plan corresponding to the current area, based on a result of the location matching.

Location matching refers to fitting locations in the signal strength distribution chart to corresponding locations in the architectural plan corresponding to the current area.

In a particular embodiment, said performing location matching between the signal strength distribution chart and the architectural plan corresponding to the current area comprises:
acquiring a location of at least one target test point among the at least one test point in the architectural plan corresponding to the current area; and
matching a location of the at least one target test point in the signal strength distribution chart with the location of the at least one target test point in the architectural plan corresponding to the current area.

In a particular embodiment, the method further comprises any one of:
acquiring an area name corresponding to the current area; retrieving at least one architectural plan corresponding to the area name from a preset image library as at least one candidate architectural plan; displaying the at least one candidate architectural plan; after detecting an instruction that selects a target candidate architectural plan from the at least one candidate architectural plan, taking the target candidate architectural plan as the architectural plan corresponding to the current area;
capturing the architectural plan corresponding to the current area with a camera; and
receiving the architectural plan corresponding to the current area from another device.

In a particular embodiment, the method further comprises:
if an overlapped area is formed by location areas indicated by location information of N test points among the least one test point, calculating a wireless signal strength in the overlapped area based on wireless signal strengths at the N test points, N being an integer larger than or equal to 2; and
determining signal strength visual information for the overlapped area based on the wireless signal strength in the overlapped area.

In a particular embodiment, said generating the signal strength distribution chart based on the signal strength visual information for each location area comprises:
performing rendering for each location area based on the signal strength visual information for the location area to form the signal strength distribution chart, wherein the signal strength visual information comprises a color, transparency, a filling pattern or any combination thereof.

According to a second aspect of embodiments, the invention relates to an information display apparatus, comprising:
an acquiring module configured to acquire location information and a wireless signal strength of at least one test point in a current area;
a first determining module configured to, for each test point, determine signal strength visual information for a location area indicated by the location information of the test point, based on the wireless signal strength at the test point;
a generating module configured to generate a signal strength distribution chart based on the signal strength visual information for each location area; and
a displaying module configured to display the signal strength distribution chart.

In a particular embodiment, the displaying module comprises: a matching sub-module and a displaying sub-module, wherein the matching sub-module is configured to perform location matching between the signal strength distribution chart and an architectural plan corresponding to the current area, and the displaying sub-module is configured to display the signal strength distribution chart in the architectural plan corresponding to the current area based on a result of the location matching.

In a particular embodiment, the matching sub-module is configured to:
acquire a location of at least one target test point among the at least one test point in the architectural plan corresponding to the current area; and
match a location of the at least one target test point in the signal strength distribution chart with the location of the at least one target test point in the architectural plan corresponding to the current area.

In a particular embodiment, the displaying module further comprises an acquiring sub-module configured to any one of:
acquire an area name corresponding to the current area; retrieve at least one architectural plan corresponding to the area name from a preset image library as at least one candidate architectural plan; display the at least one candidate architectural plan; after detecting an instruction that selects a target candidate architectural plan from the at least one candidate architectural plan, take the target candidate architectural plan as the architectural plan corresponding to the current area;
capture the architectural plan corresponding to the current area with a camera; and
receive the architectural plan corresponding to the current area from another device.

In a particular embodiment, the apparatus further comprises:
a calculating module configured to, if an overlapped area is formed by location areas indicated by location information of N test points among the at least one test point, calculate a wireless signal strength in the overlapped area based on wireless signal strengths at the N test points, N being an integer larger than or equal to 2; and
a second determining module configured to determine signal strength visual information for the overlapped area based on the wireless signal strength in the overlapped area.

In a particular embodiment, the generating module is configured to perform rendering for each location area based on the signal strength visual information for the location area to form the signal strength distribution chart, wherein the signal strength visual information comprises a color, transparency, a filling pattern or any combination thereof.

According to a third aspect of the, the invention relates to an information display apparatus, comprising:
a processor; and
a memory storing an instruction executable by the processor,
wherein the processor is configured to:
   acquire location information and a wireless signal strength of at least one test point in a current area;
   for each test point, determine, based on the wireless signal strength at the test point, signal strength visual information for a location area indicated by the location information of the test point;
   generate a signal strength distribution chart based on the signal strength visual information for each location area; and
   display the signal strength distribution chart.

In one particular embodiment, the steps of the information display method are determined by computer program instructions.

Consequently, according to a fourth aspect, the invention is also directed to a computer program for executing the steps of an information display method as defined above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as defined above.

The information medium can be any entity or device capable of storing the program.

For example, the support can comprise storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions of the embodiments of this invention have the following advantageous effects:
By acquiring location information and a wireless signal strength of at least one test point in a current area; for each test point, determining, based on the wireless signal strength at the test point, signal strength visual information for a location area indicated by the location information of the test point; based on the signal strength visual information for each location area, generating a signal strength distribution chart; and displaying the signal strength distribution chart, this invention solves the problem that the related arts can only allow a user to generally know the wireless signal quality at a given location. By presenting a wireless signal strength distribution condition of a current area to the user, the user can clearly and intuitively know the wireless signal qualities in the whole area and the wireless signal quality difference between locations in the current area, so that the user can effectively and accurately select a location with higher wireless signal quality for surfing the Internet.

It should be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
FIG. 1 is a flow chart showing an information display method according to an exemplary embodiment;
FIG. 2A is a flow chart showing an information display method according to another exemplary embodiment;
FIG. 2B is a schematic view showing an overlapped area according to another exemplary embodiment;
FIG. 2C is a schematic view showing a signal strength distribution chart according to an exemplary embodiment;
FIG. 3 is a block view showing an information display apparatus according to an exemplary embodiment;
FIG. 4 is a block view showing an information display apparatus according to another exemplary embodiment;
FIG. 5 is a block view of an apparatus according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise presented. The embodiments set forth in the following description of exemplary embodiments do not represent all embodiments consistent with the invention. Instead, they are merely examples of apparatuses and methods consistent with aspects related to the invention as recited in the appended claims.

The information display method provided by the embodiments of this invention can be performed by terminal devices having a wireless network access function. For example, the terminal device may be a mobile terminal device such as a cell phone, a tablet computer, an electronic book reader, a personal digital assistant PDA, a multimedia player and a notebook computer, or a wearable device such as a smart bracelet, a smart watch, smart glasses and a smart helmet.

In addition, the wireless networks involved in the embodiments of this invention may be WLANs based on the IEEE (Institute of Electrical and Electronics Engineers) 802.11 standards, comprising but not limited to Wi-Fi (Wireless Fidelity) networks represented by 802.11a, 802.11b, 802.11g, 802.11n or 802.11ac standards, the next generation Wi-Fi networks, or the next generation WLANs. Alternatively, the wireless networks involved in the embodiments of this invention may be mobile communication networks based on mobile communication standards, comprising but not limited to GSM (Global System for Mobile Communication) networks, 3G (the 3^{rd} Generation mobile communication technology) networks, 4G (the 4th Generation mobile communication technology) networks, or the next generation mobile communication networks.

To facilitate description and understanding, the following method embodiments, unless specified otherwise, are described by taking an example in which the steps is executed by a terminal and the wireless network is a Wi-Fi network and which is not intended to limit this invention.

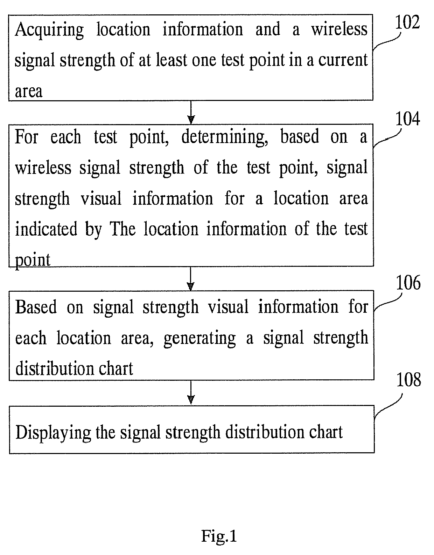

FIG. 1 is a flow chart showing an information display method according to an exemplary embodiment. The information display method may be performed by a terminal device, and may comprise the following steps.

In step 102, location information and a wireless signal strength of at least one test point in a current area are acquired.

In step 104, for each test point, signal strength visual information for a location area indicated by the location information of the test point is determined based on the wireless signal strength at the test point.

In step 106, a signal strength distribution chart is generated based on the signal strength visual information for each location area.

In step 108, the signal strength distribution chart is displayed.

In a particular embodiment, said displaying the signal strength distribution chart comprises:
performing location matching between the signal strength distribution chart and an architectural plan corresponding to the current area; and
displaying the signal strength distribution chart in the architectural plan corresponding to the current area, based on a result of the location.

In a particular embodiment, said performing location matching between the signal strength distribution chart and the architectural plan corresponding to the current area comprises:
acquiring a location of at least one target test point among the at least one test point in the architectural plan corresponding to the current area; and
matching a location of the at least one target test point in the signal strength distribution chart with the location of the at least one target test point in the architectural plan corresponding to the current area.

In a particular embodiment, the method further comprises any one of:
acquiring an area name corresponding to the current area; retrieving at least one architectural plan corresponding to the area name from a preset image library as at least one candidate architectural plan; displaying the at least one candidate architectural plan; after detecting an instruction that selects a target candidate architectural plan from the at least one candidate architectural plan, taking the target candidate architectural plan as the architectural plan corresponding to the current area;
capturing the architectural plan corresponding to the current area with a camera; and
receiving the architectural plan corresponding to the current area from another device.

In a particular embodiment, the method further comprises:
if an overlapped area is formed by location areas indicated by location information of N test points among the at least one test point, calculating a wireless signal strength in the overlapped area based on wireless signal strengths at the N test points, N being an integer larger than or equal to 2; and
determining signal strength visual information for the overlapped area based on the wireless signal strength in the overlapped area.

In a particular embodiment, said generating the signal strength distribution chart based on the signal strength visual information for each location area comprises: performing rendering for each location area based on the signal strength visual information for the location area to form the signal strength distribution chart, wherein the signal strength visual information comprises a color, transparency, a filling pattern or any combination thereof.

To sum up, according to the information display method provided by this embodiment, by acquiring location information and a wireless signal strength of at least one test point in a current area; for each test point, determining, based on the wireless signal strength at the test point, signal strength visual information for a location area indicated by the location information of the test point; based on the signal strength visual information for each location area, generating a signal strength distribution chart; and displaying the signal strength distribution chart, the problem that the related arts can only allow a user to generally know the wireless signal quality at a given location is solved. By presenting a wireless signal strength distribution condition of a current area to the user, the user can clearly and intuitively know the wireless signal qualities throughout the area and the wireless signal quality difference between locations in the current area, so that the user can effectively and accurately select a location with higher wireless signal quality for surfing the Internet.

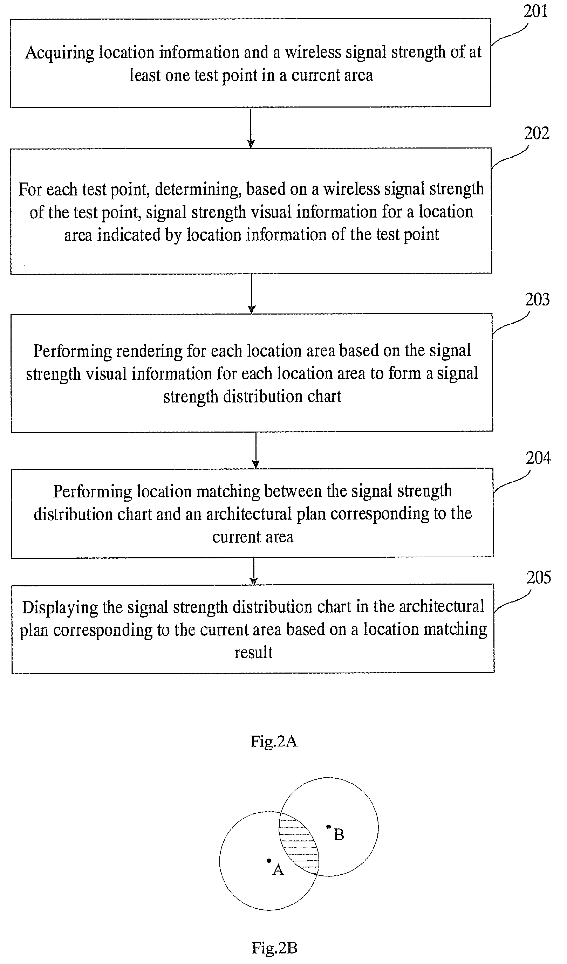

FIG. 2A is a flow chart showing an information display method according to another exemplary embodiment. The information display method may be performed by a terminal device, and may comprise the following steps.

In step 201, location information and a wireless signal strength of at least one test point in a current area are acquired.

When a user needs to know the wireless signal strength distribution condition in a current area, the user may hold a terminal device and move in the current area. During the movement process, the terminal device acquires location information and a wireless signal strength of at least one test point in the current area.

When the current area is an indoor environment such as a house, an office or a shopping mall, the terminal device may acquire the location information of the at least one test point in the current area using related indoor positioning technologies. For example, the related indoor positioning technologies comprise but are not limited to inertial positioning technologies, wireless positioning technologies (such as Wi-Fi positioning technologies, ZigBee positioning technologies, Bluetooth positioning technologies, ultra-wide band positioning technologies and wireless frequency positioning technologies), infrared ray positioning technologies and supersonic wave positioning technologies. When the current area is an outdoor environment such as a stadium, a park or a street, the terminal device may acquire the location information of the at least one test point in the current area using related outdoor positioning technologies. For example, the related outdoor positioning technologies comprise but are not limited to GPS (Global Positioning System) positioning technologies, and base station positioning technologies. In this embodiment, examples are mainly given to test and display the wireless signal strength distribution condition of indoor environments. Considering that a terminal device such as a cell phone or a tablet computer is usually equipped with sensors such as a gyro, an acceleration sensor or a magnetometer, and to reduce the hardware configuration requirements for external environments as much as possible, indoor positioning and location information collection of test points for indoor environments are realized by the sensors provided in the terminal device. For example, inertial positioning is realized by a combination of a gyro and an acceleration sensor; drift free positioning is realized by a combination of a magnetometer and an acceleration sensor; redundant positioning is realized by a combination of a gyro, a magnetometer and an acceleration sensor. By performing indoor positioning using sensors provided in the terminal device, collection of location information and movement trajectories can be realized without raising hardware configuration requirement for external environments, which improves the operability and utility of the solutions.

In addition, as mentioned in the foregoing content, the network involved in this embodiment may be a WLAN or a mobile communication network. Take the test of the Wi-Fi signal strength distribution condition in a house as an example. When the user holds the terminal device and moves, the terminal device can sequentially collect the location information of at least one test point using the in-built sensors, and collect the Wi-Fi signal strength corresponding to each piece of location information. The procedure of acquiring a wireless signal strength distribution by the terminal device can be easily conceived by those skilled in the art, and will not be illustrated herein.

To improve the accuracy of the collected location information and wireless signal strengths, when the user who needs to test the wireless signal strength distribution condition in a target area moves with a terminal device in his/her hand, he/she should move slowly throughout the target area.

In step 202, for each test point, based on the wireless signal strength at the test point, signal strength visual information for a location area indicated by the location information of the test point is determined.

The location area indicated by location information of each test point may be a predetermined location area with the test point as the center. The shape of the predetermined location area comprises but is not limited to a circle, a square, or a regular hexagon. The predetermined location area may have a predetermined area value.

In addition, the signal strength visual information comprises but is not limited to a color, transparency, a filling pattern or any combination thereof. Different pieces of signal strength visual information represent different wireless signal strengths. Each piece of signal strength visual information represents a wireless signal strength value or a wireless signal strength value range.

In one example, a color is exemplified as the signal strength visual information. The correspondence relation between the signal strength visual information and the wireless signal strength may be shown in Table 1:

**Table 1**

| Color | Wireless Signal Strength (dBm) | Wireless Signal Quality |
|---|---|---|
| Red | -0N~-20 | Strong |
| Jacinth | -21~-35 | Relatively strong |
| Orange | -36~-50 | Good |
| Yellow | -51~-65 | Average |
| Green | -66~-80 | Weak |
| Blue | -81~-100 | Very weak |

For example, with reference to the correspondence relation shown in the above Table 1, assuming that the wireless signal strength at a test point is -40dBm, then the signal strength visual information for the location area corresponding to this test point is orange. Of course, the correspondence relation shown in the above Table 1 is only exemplary and explanatory. In practical application, grouping can be made according to the actual needs, which will not be limited in this embodiment.

In addition, if an overlapped area is formed by location areas indicated by location information of N test points, a wireless signal strength in the overlapped area is calculated based on wireless signal strengths at the N test points. The signal strength visual information for the overlapped area is determined based on the wireless signal strength in the overlapped area, wherein N is an integer larger than or equal to 2. In a possible embodiment, an average of the wireless signal strengths at the N test points is taken as the wireless signal strength of the overlapped area. With reference to FIG. 2B, an overlapped area (the hatched area in FIG. 2B) is formed by a location area corresponding to a test point A and a location area corresponding to a test point B. Assuming the wireless signal strength of the test point A is -40dBm and the wireless signal strength of the test point B is -30dBm, then the wireless signal strength of the overlapped area is -35dBm. From the correspondence relation shown in the above Table 1, it can be derived that the signal strength visual information for the location area corresponding to the test point A excluding the overlapped area is orange, the signal strength visual information for the location area corresponding to the test point B excluding the overlapped area is jacinth, and the signal strength visual information of the overlapped area is jacinth too.

Of course, the above embodiment only gives an example in which the signal strength visual information is a color. In other possible embodiments, the signal strength visual information comprises but is not limited to a color, transparency, a filling pattern or any combination thereof. For example, different transparencies may represent different wireless signal strengths. The greater the transparency is, the stronger the wireless signal strength is, and vice versa.

In step 203, rendering for each location area is performed based on the signal strength visual information for the location area to form the signal strength distribution chart.

The terminal device performs rendering based on the signal strength visual information for each location area to form the signal strength distribution chart. In the signal strength distribution chart, different pieces of signal strength visual information represent different wireless signal strengths. The user can acquire the wireless signal strength distribution condition at each location in the current area based on the signal strength visual information for the respective location in the signal strength distribution chart.

In addition, the terminal device may directly display the generated signal strength distribution chart. In this embodiment, to allow the user to clearly and intuitively know the wireless signal strength distribution condition at each location in the current area, the terminal device displays the signal strength distribution chart and the architectural plan corresponding to the current area together, by executing the following steps 204-205.

In step 204, location matching between the signal strength distribution chart and an architectural plan corresponding to the current area is performed.

Location matching refers to fitting locations in the signal strength distribution chart to corresponding locations in the architectural plan corresponding to the current area, so that the user can clearly and intuitively know the wireless signal strength distribution condition at each location in the real environment with reference to the architectural plan corresponding to the current area.

In a possible implementation, the terminal device acquires a location of at least one target test point in the architectural plan corresponding to the current area, and matches a location of the at least one target test point in the signal strength distribution chart with the location of the at least one target test point in the architectural plan corresponding to the current area. The target test point comprises but is not limited to a start test point, an end test point or one or more intermediate test points selected by the user. Taking the target test points comprising a start test point and an end test point as an example, the user may mark the locations of the start test point and the end test point in the architectural plan corresponding to the current area according to the actual movement during test. Accordingly, the terminal may perform location matching between the two images based on the locations of the start test point in the signal strength distribution chart and the architectural plan and the locations of the end test point in the signal strength distribution chart and the architectural plan.

Of course, in other possible implementations than the implementations listed in the above, the terminal device may perform location matching between the two images according to the shapes of the signal strength distribution chart and the architectural plan corresponding to the current area. In another embodiment, the terminal device may recognize corresponding characteristic points from the signal strength distribution chart and the architectural plan corresponding to the current area using image recognition technologies, and perform location matching between the two images, wherein the characteristic points may be edge points or corner points or the like.

In addition, the terminal device may acquire the architectural plan corresponding to the current area through the following possible manners.

A first possible manner comprises: acquiring an area name corresponding to the current area; retrieving at least one architectural plan corresponding to the area name from a preset image library as at least one candidate architectural plan; displaying the at least one candidate architectural plan; after detecting an instruction that selects a target candidate architectural plan from the at least one candidate architectural plan, taking the target candidate architectural plan as the architectural plan corresponding to the current area. The preset image library comprises correspondence relations between area names and architectural plans. The area names comprise but are not limited to a community name, a building name, a name of shopping mall and a stadium name. The preset image library may be stored in the terminal device locally or in a cloud server. To save storage resources of the terminal device and improve the accuracy of the acquired architectural plan, the preset image library is stored in a cloud server, which may supplement, modify and update the preset image library. In an example, the user inputs a community name into the terminal device; the terminal device sends an acquiring request containing the community name to the cloud server; the cloud server retrieves at least one architectural plans corresponding to the community name from the preset image library, and sends the at least one architectural plans to the terminal device, wherein the architectural plans may be floor plans; the terminal device displays the received architectural plans, so that the user can select an architectural plan corresponding to the current area.

A second possible manner comprises: capturing the architectural plan corresponding to the current area with a camera. For example, the user may use the terminal device to capture a paper version of the architectural plan corresponding to the current area.

A third possible manner comprises: receiving the architectural plan corresponding to the current area from another device. For example, the terminal device may receive an electronic version of the architectural plan corresponding to the current area from another device.

In a particular embodiment, if the terminal device acquires the architectural plan corresponding to the current area using the above second and third manners, the area name corresponding to the current area and the architectural plan may be sent to the cloud server, so that the cloud server can update the preset image library.

In step 205, the signal strength distribution chart is displayed in the architectural plan corresponding to the current area based on a result of the location matching.

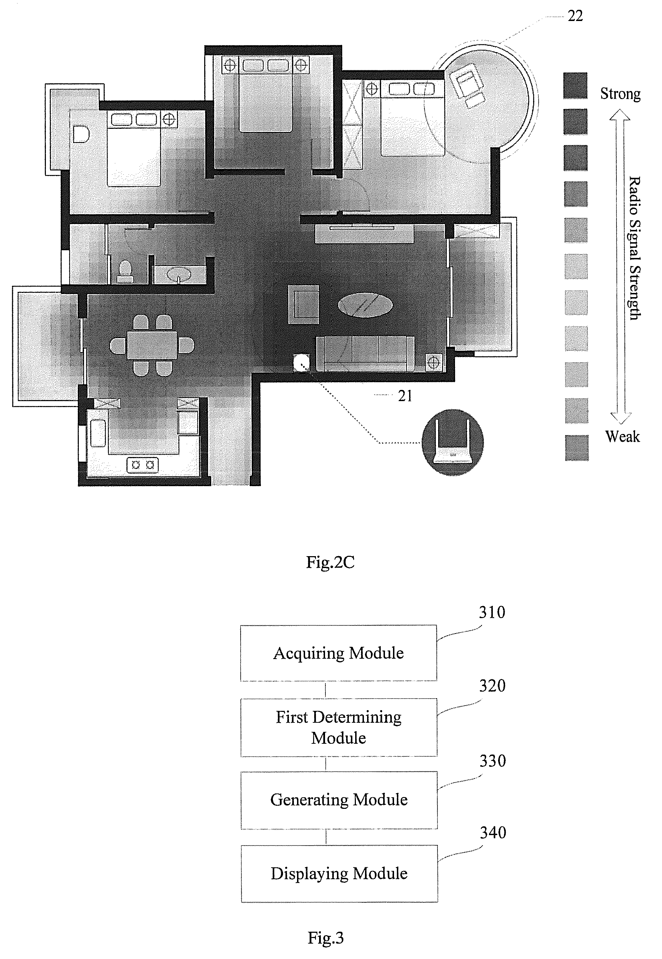

The terminal device displays the signal strength distribution chart in the architectural plan corresponding to the current area based on the location matching result. With reference to FIG. 2C, FIG. 2C is a schematic view showing a signal strength distribution chart according to another exemplary embodiment. In FIG. 2C, the signal strength distribution chart is displayed in the architectural plan corresponding to the current area, so that the user can know the wireless signal strength distribution conditions at locations throughout the current area. For example, the wireless signal strength in the location area 21 (near the router) is relatively strong, and the wireless signal strength in the location area 22 (at the balcony) is relatively weak.

To sum up, according to the information display method provided by this embodiment, by acquiring location information and a wireless signal strength of at least one test point in a current area; for each test point, determining, based on the wireless signal strength at the test point, signal strength visual information for a location area indicated by the location information of the test point; based on the signal strength visual information for each location area, generating a signal strength distribution chart; and displaying the signal strength distribution chart, the problem that the related arts can only allow a user to generally know the wireless signal quality at a given location is solved. By presenting a wireless signal strength distribution condition of a current area to the user, the user can clearly and intuitively know the wireless signal qualities throughout the area and the wireless signal quality difference between locations in the current area, so that the user can effectively and accurately select a location with higher wireless signal quality for surfing the Internet.

In addition, by performing location matching between the signal strength distribution chart and an architectural plan corresponding to the current area, and displaying the signal strength distribution chart in the architectural plan corresponding to the current area based on a location matching result, the user can clearly and intuitively know the wireless signal strength distribution condition at each location of the current area.

The procedures executed by the respective steps of the information display method provided by this embodiment can be performed by an application, which may be installed by a user in a terminal device, such as a cell phone or a tablet computer. When the user needs to know the wireless signal strength distribution condition of a target area, the user only needs to open and run the application; then the user holds the terminal device and moves in the target area, so that the wireless signal strength distribution condition of the target area can be easily tested.

When there are multiple wireless networks of the same type in the target area, such as multiple Wi-Fi networks, the terminal device can test and display the wireless signal strength distribution condition for each Wi-Fi network in the target area by using the steps and procedures shown in the embodiments of FIG. 1 or 2A. In addition, when it is needed to display the comprehensive wireless signal strength distribution condition of the target area, the terminal device may select, for each location in the target area, a maximum value from multiple wireless signal strengths corresponding to the location as the wireless signal strength at that location, and then determines the signal strength visual information of that location. Finally, by integrating the signal strength visual information at individual locations, the signal strength distribution chart representing the comprehensive wireless signal strength distribution condition can be formulated.

The followings are apparatus embodiments of this invention, which may be used to execute the method embodiments of this invention. For the non-disclosed details of the apparatus embodiments of this invention, the method embodiments of this invention can be referred to.

FIG. 3 is a block diagram showing an information display apparatus according to an exemplary embodiment. The information display apparatus may be incorporated in a terminal device, and may comprise: an acquiring module 310, a first determining module 320, a generating module 330 and a displaying module 340.

The acquiring module 310 is configured to acquire location information and a wireless signal strength of at least one test point in a current area.

The first determining module 320 is configured to, for each test point, determine signal strength visual information for a location area indicated by the location information of the test point, based on the wireless signal strength at the test point.

The generating module 330 is configured to generate a signal strength distribution chart based on the signal strength visual information for each location area.

The displaying module 340 is configured to display the signal strength distribution chart.

To sum up, according to the information display apparatus provided by this embodiment, by acquiring location information and a wireless signal strength of at least one test point in a current area; for each test point, determining, based on the wireless signal strength of at the test point, signal strength visual information for a location area indicated by the location information of the test point; based on the signal strength visual information for each location area, generating a signal strength distribution chart; and displaying the signal strength distribution chart, the problem that the related arts can only allow a user to generally know the wireless signal quality at a given location is solved. By presenting a wireless signal strength distribution condition of a current area to the user, the user can clearly and intuitively know the wireless signal qualities throughout the area and the wireless signal quality difference between locations in the current area, so that the user can effectively and accurately select a location with higher wireless signal quality for surfing the Internet.

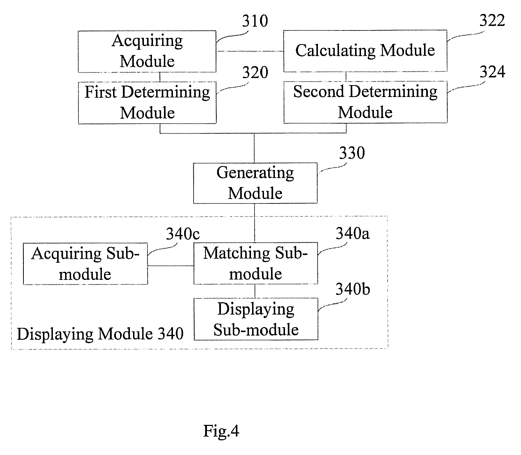

FIG. 4 is a block diagram showing an information display apparatus according to another exemplary embodiment. The information display apparatus may be incorporated in a terminal device, and may comprise: an acquiring module 310, a first determining module 320, a generating module 330 and a displaying module 340.

The acquiring module 310 is configured to acquire location information and a wireless signal strength of at least one test point in a current area.

The first determining module 320 is configured to, for each test point, determine signal strength visual information for a location area indicated by the location information of the test point, based on the wireless signal strength at the test point.

The generating module 330 is configured to generate a signal strength distribution chart based on the signal strength visual information for each location area.

The displaying module 340 is configured to display the signal strength distribution chart.

In a particular embodiment, the displaying module 340 comprises: a matching sub-module 340a and a displaying sub-module 340b.

The matching sub-module 340a is configured to perform location matching between the signal strength distribution chart and an architectural plan corresponding to the current area.

The displaying sub-module 340b is configured to display the signal strength distribution chart in the architectural plan corresponding to the current area based on a result of the location matching.

In a possible implementation, the matching sub-module 340a is configured to: acquire a location of at least one target test point among the at least one test point in the architectural plan corresponding to the current area; and match a location of the at least one target test point in the signal strength distribution chart with the location of the at least one target test point in the architectural plan corresponding to the current area.

In a particular embodiment, the displaying module 340 also comprises an acquiring sub-module 340c.

In a possible implementation, the acquiring sub-module 340c is configured to: acquire an area name corresponding to the current area; retrieve at least one architectural plan corresponding to the area name from a preset image library as at least one candidate architectural plan; display the candidate architectural plan; after detecting an instruction that selects a target candidate architectural plan from the at least one candidate architectural plan, take the target candidate architectural plan as the architectural plan corresponding to the current area.

In another possible implementation, the acquiring sub-module 340c is configured to capture the architectural plan corresponding to the current area with a camera.

In yet another possible implementation, the acquiring sub-module 340c is configured to receive the architectural plan corresponding to the current area from another device.

In a particular embodiment, the apparatus further comprises a calculating module 322 and a second determining module 324.

The calculating module 322 is configured to, if an overlapped area is formed by location areas indicated by location information of N test points, calculate a wireless signal strength in the overlapped area based on wireless signal strengths at the N test points, N being an integer larger than or equal to 2.

The second determining module 324 is configured to determine signal strength visual information for the overlapped area based on the wireless signal strength in the overlapped area.

In a particular embodiment, the generating module 330 is configured to perform rendering for each location area based on the signal strength visual information for the location area to form the signal strength distribution chart.

The signal strength visual information comprises a color, transparency, a filling pattern or any combination thereof.

To sum up, according to the information display apparatus provided by this embodiment, by acquiring location information and a wireless signal strengthof at least one test point in a current area; for each test point, determining, based on the wireless signal strength of at the test point, signal strength visual information for a location area indicated by the location information of the test point; based on the signal strength visual information for each location area, generating a signal strength distribution chart; and displaying the signal strength distribution chart, the problem that the related arts can only allow a user to generally know the wireless signal quality at a given location is solved. By presenting a wireless signal strength distribution condition of a current area to the user, the user can clearly and intuitively know the wireless signal qualities throughout the area and the wireless signal quality difference between locations in the current area, so that the user can effectively and accurately select a location with higher wireless signal quality for surfing the Internet.

In addition, by performing location matching between the signal strength distribution chart and an architectural plan corresponding to the current area, and displaying the signal strength distribution chart in the architectural plan corresponding to the current area based on a location matching result, the user can clearly and intuitively know the wireless signal strength distribution condition at each location of the current area.

With respect to the apparatus in the above embodiments, the specific manners for performing operations for individual modules therein have been described in detail in the embodiments regarding the steps of the play control method, and will not be elaborated herein.

An exemplary embodiment of this invention also provides an information display apparatus, which can perform the information display method provided by this invention. The apparatus comprises: a processor; and a memory storing an instruction executable by the processor, wherein the processor is configured to:
acquire location information of and a wireless signal strength at at least one test point in a current area;
for each test point, determine, based on the wireless signal strength at the test point, signal strength visual information for a location area indicated by the location information of the test point;
generate a signal strength distribution chart based on the signal strength visual information for each location area; and
display the signal strength distribution chart.

In a particular embodiment, the processor is configured to:
perform location matching between the signal strength distribution chart and an architectural plan corresponding to the current area; and
display the signal strength distribution chart in the architectural plan corresponding to the current area based on a result of the location matching.

In a particular embodiment, the processor is configured to:
acquire a location of at least one target test point among the at least one test point in the architectural plan corresponding to the current area; and
match a location of the at least one target test point in the signal strength distribution chart with the location of the at least one target test point in the architectural plan corresponding to the current area.

In a particular embodiment, the processor is also configured to:
acquire an area name corresponding to the current area; retrieving at least one architectural plan corresponding to the area name from a preset image library as at least one candidate architectural plan; displaying the at least one candidate architectural plan; after detecting an instruction that selects a target candidate architectural plan from the at least one candidate architectural plan, take the target candidate architectural plan as the architectural plan corresponding to the current area; or
capture the architectural plan corresponding to the current area with a camera; or receive the architectural plan corresponding to the current area from another device.

In a particular embodiment, the processor is also configured to:
if an overlapped area is formed by location areas indicated by location information of N test points among the at least one test point, calculate a wireless signal strength in the overlapped area based on wireless signal strengths at the N test points, N being an integer larger than or equal to 2; and
determine signal strength visual information for the overlapped area based on the wireless signal strength in the overlapped area.

In a particular embodiment, the processor is also configured to: perform rendering for each location area based on the signal strength visual information for the location area to form the signal strength distribution chart, wherein the signal strength visual information comprises a color, a transparency, a filling pattern or any combination thereof.

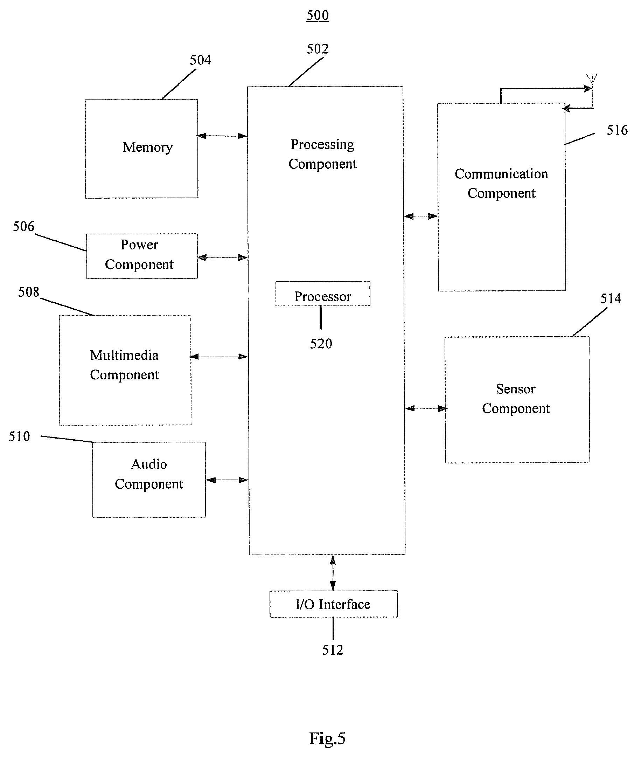

FIG. 5 is a block diagram showing an apparatus 500 according to another exemplary embodiment. For example, the apparatus 500 may be provided as a mobile phone, a computer, a digital broadcasting device, a messaging device, a game console, a tablet, a medical device, a fitness equipment, a personal digital assistant or the like.

Referring to FIG. 5, the apparatus 500 may comprise one or more of the following components: a processing component 502, a memory 504, a power supply component 506, a multimedia component 508, an audio component 510, an input/output (I/O) interface 512, a sensor component 514, and a communication component 516.

The processing component 502 typically controls overall operations of the apparatus 500, such as the operations associated with display, telephone calls, data communications, camera operations, and recording operations. The processing component 502 may comprise one or more processors 518 to execute instructions to perform all or part of the steps in the above described methods. Moreover, the processing component 502 may comprise one or more modules which facilitate the interaction between the processing component 502 and other components. For instance, the processing component 502 may comprise a multimedia module to facilitate the interaction between the multimedia component 508 and the processing component 502.

The memory 504 is configured to store various types of data to support the operation of the apparatus 500. Examples of such data comprise instructions for any applications or methods operated on the apparatus 500, contact data, phonebook data, messages, pictures, video, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the apparatus 500. The power component 506 may comprise a power supply management system, one or more power sources, and any other components associated with the generation, management, and distribution of power in the apparatus 500.

The multimedia component 508 comprises a screen providing an output interface between the apparatus 500 and the user. In some embodiments, the screen may comprise a liquid crystal display (LCD) and a touch panel (TP). If the screen comprises the touch panel, the screen may be implemented as a touch screen to receive input signals from the user. The touch panel comprises one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 508 comprises a front camera and/or a rear camera. The front camera and/or the rear camera may receive an external multimedia datum while the apparatus 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 comprises a microphone (MIC) configured to receive an external audio signal when the apparatus 500 is in an operation mode, such as a call mode, a recording mode, and a voice recognition mode. The received audio signal may be further stored in the memory 504 or transmitted via the communication component 516. In some embodiments, the audio component 510 further comprises a speaker to output audio signals.

The I/O interface 512 provides an interface between the processing component 502 and peripheral interface modules, such as a keyboard, a click wheel, buttons, and the like. The buttons may comprise, but are not limited to, a home button, a volume button, a starting button, and a locking button.

The sensor component 514 comprises one or more sensors to provide status assessments of various aspects of the apparatus 500. For instance, the sensor component 514 may detect an open/closed status of the apparatus 500, relative positioning of components, e.g., the display and the keypad, of the apparatus 500, a change in position of the apparatus 500 or a component of the apparatus 500, a presence or absence of user contact with the apparatus 500, an orientation or an acceleration/deceleration of the apparatus 500, and a change in temperature of the apparatus 500. The sensor component 514 may comprise a proximity sensor configured to detect the presence of nearby objects without any physical contact. The sensor component 514 may also comprise a light sensor, such as a CMOS or CCD image sensor, for use in imaging applications. In some embodiments, the sensor component 514 may also comprise an accelerometer sensor, a gyroscope sensor, a magnetic sensor, a pressure sensor, or a temperature sensor.

The communication component 516 is configured to facilitate communication, wired or wirelessly, between the apparatus 500 and other devices. The apparatus 500 can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further comprises a near field communication (NFC) module to facilitate short-range communications. For example, the NFC module may be implemented based on a wireless frequency identification (RFID) technology, an infrared data association (IrDA) technology, an ultra-wideband (UWB) technology, a Bluetooth (BT) technology, and other technologies.

In exemplary embodiments, the apparatus 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

The exemplary embodiments also provides a non-volatile computer-readable storage medium containing instructions, such as the memory 504 containing instructions which may be executed by the processing component 520 of the apparatus 500 to perform the above methods. For example, the non-volatile computer-readable storage medium may be a ROM, a RAM, a CD-ROM, a tape, a floppy disc, an optical data storage device or the like.

There is provided a non-transitory computer-readable storage medium having stored therein instructions that, when executed by a processor of the apparatus 500, causes the apparatus 500 to perform the above information display method.

Other embodiments of the invention will be apparent to those skilled in the art from consideration of the specification and practice of the invention disclosed here. This application is intended to cover any variations, uses, or adaptations of the invention following the general principles thereof and comprising such departures from the present invention as come within known or customary practice in the art. It is intended that the specification and examples be considered as exemplary only, with a true scope of the invention being indicated by the following claims.

## Claims

1. An information display method, **characterized in that** it comprises:
acquiring (102) location information and a wireless signal strength of at least one test point in a current area;
for each test point, determining (104), based on the wireless signal strength of the test point, signal strength visual information for a location area indicated by the location information of the test point;
generating (106) a signal strength distribution chart, based on the signal strength visual information for each location area; and
displaying (108) the signal strength distribution chart.

2. The method according to claim 1, **characterized in that** said displaying (108) the signal strength distribution chart comprises:
performing (204) location matching between the signal strength distribution chart and an architectural plan corresponding to the current area; and
displaying (205) the signal strength distribution chart in the architectural plan corresponding to the current area, based on a result of the location matching.

3. The method according to claim 2, **characterized in that** said performing (204) location matching between the signal strength distribution chart and the architectural plan corresponding to the current area comprises:
acquiring a location of at least one target test point among the at least one test point in the architectural plan corresponding to the current area; and
matching a location of the at least one target test point in the signal strength distribution chart with the location of the at least one target test point in the architectural plan corresponding to the current area.

4. The method according to any one of claims 2-3, **characterized in that** it further comprises any one of:
acquiring an area name corresponding to the current area; retrieving at least one architectural plan corresponding to the area name from a preset image library as at least one candidate architectural plan; displaying the at least one candidate architectural plan; after detecting an instruction that selects a target candidate architectural plan from the at least one candidate architectural plan, taking the target candidate architectural plan as the architectural plan corresponding to the current area;
capturing the architectural plan corresponding to the current area with a camera; and
receiving the architectural plan corresponding to the current area from another device.

5. The method according to any one of claims 1-4, **characterized in that** it further comprises:
if an overlapped area is formed by location areas indicated by location information of N test points among the at least one test point, calculating a wireless signal strength in the overlapped area based on wireless signal strengths at the N test points, N being an integer larger than or equal to 2; and
determining signal strength visual information for the overlapped area based on the wireless signal strength in the overlapped area.

6. The method according to any one of claims 1-5, wherein said generating (106) the signal strength distribution chart based on the signal strength visual information for each location area comprises: performing (203) rendering for each location area based on the signal strength visual information for the location area to form the signal strength distribution chart, wherein the signal strength visual information comprises a color, transparency, a filling pattern or any combination thereof.

7. An information display apparatus, **characterized in that** it comprises:
an acquiring module (310) configured to acquire location information and a wireless signal strength of at least one test point in a current area;
a first determining module (320) configured to, for each test point, determine signal strength visual information for a location area indicated by the location information of the test point, based on the wireless signal strength at the test point;
a generating module (330) configured to generate a signal strength distribution chart based on the signal strength visual information for each location area; and
a displaying module (340) configured to display the signal strength distribution chart.

8. The apparatus according to claim 7, **characterized in that** the displaying module (340) comprises: a matching sub-module (340a) and a displaying sub-module (340b), wherein the matching sub-module (340a) is configured to perform location matching between the signal strength distribution chart and an architectural plan corresponding to the current area, and the displaying sub-module (340b) is configured to display the signal strength distribution chart in the architectural plan corresponding to the current area based on a result of the location matching.

9. The apparatus according to claim 8, **characterized in that** the matching sub-module (340a) is configured to:
acquire a location of at least one target test point among the at least one test point in the architectural plan corresponding to the current area; and
match a location of the at least one target test point in the signal strength distribution chart with the location of the at least one target test point in the architectural plan corresponding to the current area.

10. The apparatus according to claim 8, **characterized in that** the displaying module further comprises an acquiring sub-module configured to any one of:
acquire an area name corresponding to the current area; retrieve at least one architectural plan corresponding to the area name from a preset image library as at least one candidate architectural plan; display the at least one candidate architectural plan; after detecting an instruction that selects a target candidate architectural plan from the at least one candidate architectural plan, take the target candidate architectural plan as the architectural plan corresponding to the current area;
capture the architectural plan corresponding to the current area with a camera; and
receive the architectural plan corresponding to the current area from another device.

11. The apparatus according to any one of claims 7-10, **characterized in that** it further comprises:
a calculating module configured to, if an overlapped area is formed by location areas indicated by location information of N test points among the at least one test point, calculate a wireless signal strength in the overlapped area based on wireless signal strengths at the N test points, N being an integer larger than or equal to 2; and
a second determining module configured to determine signal strength visual information for the overlapped area based on the wireless signal strength in the overlapped area.

12. The apparatus according to any one of claims 7-11, **characterized in that** the generating module is configured to perform rendering for each location area based on the signal strength visual information for the location area to form the signal strength distribution chart, wherein the signal strength visual information comprises a color, transparency, a filling pattern or any combination thereof.

13. A computer program comprising instructions for executing the steps of an information display method according to any one of claims 1 to 6, when said program is executed by a computer.

14. A recording medium readable by a computer and having recorded thereon a computer program comprising instructions for executing the steps of an information display method according to any one of claims 1 to 6.
